# EUROPEAN PATENT SPECIFICATION

(11) **EP 3 873 065 B1**
(45) Date of publication and mention of the grant of the patent: **04.10.2023**
(21) Application number: 18938863.0
(22) Date of filing: 31.10.2018
(51) Int. Cl.: H04L 67/02, G06F 16/9535, H04L 67/55

(54) **CONTENT RECOMMENDATION METHOD, MOBILE TERMINAL, AND SERVER**
VERFAHREN ZUR EMPFEHLUNG VON INHALTEN, MOBILES ENDGERÄT UND SERVER
PROCÉDÉ DE RECOMMANDATION DE CONTENU, TERMINAL MOBILE, ET SERVEUR

(43) Date of publication of application: 01.09.2021
(73) Proprietor: SHENZHEN HEYTAP TECHNOLOGY CORP., LTD., Shenzhen, Guangdong 518057 (CN); GUANGDONG OPPO MOBILE TELECOMMUNICATIONS CORP., LTD., Dongguan, Guangdong 523860 (CN)
(72) Inventor: CHEN, Chongyong, Dongguan, Guangdong 518057 (CN)
(74) Representative: Ipside
(86) International application number: PCT/CN2018/113166
(87) International publication number: WO 2020/087386

(56) References cited:
- CN-A- 107 612 974
- CN-A- 107 844 525
- JP-A- 2012 142 704
- US-A1- 2011 225 197
- US-A1- 2014 331 142

## Description

### TECHNICAL FIELD

The present disclosure relates to the field of Internet technologies, and in particular, to a content recommendation method, a mobile terminal and a server.

### BACKGROUND

With development of science and technology, mobile terminals have become one of most common electronic products in people's daily life. People usually browse various content through electronic products, such as web pages, videos, and the like. However, many users may not be able to get content the users are interested in, thus, the mobile terminals can push the content that the users are interested in to the users. However, in existing recommendation methods, content that the users have lost interest in will continue to be pushed, and the content that the users are interested in may not be pushed, and push effects are poor.

For example, US20110225197A1 discloses a system for recommending feeds for a user. The system includes a client with a web browser, an application server, and a content server. The browser tracks the user's browsing activity and transmits user data related to the user's browsing activity to the application server. The application server searches the content server to determine feeds that may be relevant to the user's browsing activity and then communicates those feeds to the browser. The browser displays the received feeds to the user as feed recommendations, prompting the user to select from among the recommended feeds. Once the user has selected one or more feeds, the browser transmits the user's selection to the application server, which enables the feeds to be presented subsequently to the user. In this way, the system uses the user's browsing activity to obtain automatically for a user feeds that are likely to be relevant to the user.

JP2012142704A discloses a recommendation system. The recommendation system includes a set top box (STB) for storing a profile which includes the history of a viewer concerning the browsing of web contents and indicates the taste tendency of the viewer, and generating recommendation information to recommend to the viewer the web content which is extracted in accordance with the profile from the web contents related to a program content, a portable terminal for displaying the recommendation information and receiving an operation input for the web content to be selected by the viewer from the displayed information, and a communication service server for storing a browsing history with respect to the web content recommended based on the recommendation information. Besides, the recommendation system updates the profile stored in the STB by the browsing history stored in the communication service server.

US20140331142A1 discloses a content recommendation method for a terminal having a browser client. The method includes: analyzing a webpage being browsed by a user and determining one or more TAGs corresponding to the webpage; obtaining a list of uniform resource locators (URLs) corresponding to the TAGs from a preconfigured TAG database; and recommending contents related to the TAGs to the user based on the contents of the websites corresponding to the URL list.

CN107844525A discloses an information personalized recommendation method, a system and a device based on user behavior. The method includes: reading user's information sending record and information clicking record; obtaining the tag of the corresponding information according to the user's information sending record and information click record, and calculating the recommended method click through rate and tag click through rate; generating a recommendation list according to the obtained tags; obtaining information recently clicked by the user and generating an extended reading recommendation list; and selecting information combination from the recommendation list and extended reading recommendation list according to the preset proportion, and recommending the information combination to the front end for display based on the click through rate of recommendation method.

### SUMMARY

The invention is defined by a method according to claim 1, a server according to claim 12, a mobile terminal according to claim 13 and a computer readable storage medium according to claim 14. Further details are defined in claims 2-11.

### BRIEF DESCRIPTION OF THE DRAWINGS

In order to make the technical solution described in the embodiments of the present disclosure more clearly, the drawings used for the description of the embodiments will be briefly described. Apparently, the drawings described below are only for illustration, but not for limitation. It should be understood that, one skilled in the art may acquire other drawings based on these drawings, without making any inventive work.
FIG. 1 shows an interactive diagram of a content recommendation system provided by some embodiments of the present disclosure.
FIG. 2 shows a flowchart of a content recommendation method provided by some embodiments of the present disclosure.
FIG. 3 shows a flowchart of a content recommendation method provided by other embodiments of the present disclosure.
FIG. 4 shows a flowchart of a content recommendation method provided by other embodiments of the present disclosure.
FIG. 5 shows a schematic diagram of a display of a tag provided by some embodiments of the present disclosure.
FIG. 6 shows a schematic diagram of a display of a tag provided by other embodiments of the present disclosure.
FIG. 7 shows a schematic diagram of a display of a tag provided by other embodiments of the present disclosure.
FIG. 8 shows a schematic diagram of a display of a tag provided by other embodiments of the present disclosure.
FIG. 9 shows a schematic diagram of a display of a tag provided by other embodiment of the present disclosure.
FIG. 10 shows a flowchart of a content recommendation method provided by other embodiments of the present disclosure.
FIG. 11 shows a signaling interaction diagram of a content recommendation method provided by other embodiments of the present disclosure.
FIG. 12 shows a functional module diagram of a content recommendation apparatus provided by some embodiments of the present disclosure.
FIG. 13 shows a functional module diagram of a content recommendation apparatus provided by other embodiments of the present disclosure.
FIG. 14 shows a structural block diagram of a mobile terminal provided by some embodiments of the present disclosure.
FIG. 15 shows a structural block diagram of a server provided by some embodiments of the present disclosure.
FIG. 16 is a storage unit for storing or carrying program codes implementing content recommendation methods according to some embodiments of the present disclosure.
FIG. 17 is a storage unit for storing or carrying program codes implementing content recommendation methods according to other embodiments of the present disclosure.

### DETAILED DESCRIPTION OF THE PREFERRED EMBODIMENTS

In order to facilitate the understanding of the present disclosure, the present disclosure will be described more fully below with reference to the relevant drawings.

With functions of mobile terminals becoming more and more perfect, more and more applications can meet various needs of users. The users can browse more and more information, such as various news web pages, review articles, questions and answers content and videos, through the mobile terminals. Specifically, the users can browse information through various applications, such as news application (APP), browser, questions and answers APP, video APP, and the like.

However, a user may not be interested in all the information. Different users may be interested in different information. For example, some users may be interested in content related to sports, some users may be interested in content related to shopping, and some users may be interested in content related to star entertainment. If all content is pushed to each mobile terminal without distinction, the user need to find content that he or she is interested in from the large amount of information received by the mobile terminal, thus wasting user's time and affecting user's experience. Therefore, when content is pushed to the mobile terminal, content that the user corresponding to the mobile terminal is interested in can be pushed.

If content that the user is interested in is pushed to the mobile terminal, it needs to know what content the user is interested in. Generally, each piece of content can be classified, such as science and technology, education, star, sports, constellation, history, and the like, and specific classification methods and categories are not limited in the embodiments of the present disclosure. And then push is made according to categories that the user is interested in.

Each category can be represented by a tag. A piece of content belongs to a category means that there is a tag representing the category. Content corresponding to each tag refers to content belonging to a category corresponding to the tag. Specifically, each piece of content can be divided into one or more categories and corresponds to one or more different tags. For example, a news can belong to three categories of education, sports and history and corresponds to three tags of education, sports and history. The tag is only a way to describe the category, any form of categorizing the content can be considered as a tag representing the category.

In a first embodiment, when the application is used for a first time after the application is downloaded from the mobile terminal, a plurality of tags can be provided for the user for selection, and a tag selected by the user is considered as a user's interested tag, that is, a tag that the user is interested in. When the content is pushed to the mobile terminal, the content corresponding to the user's interested tags is mainly pushed.

In a second embodiment, a tag selection interface can be set in the application, and the user can select tags that the user is interested in on the tag selection interface at any time. When the content is pushed to the mobile terminal, content corresponding to selected interested tags is pushed.

In a third embodiment, the user's interested tags are determined according to various content browsed by the user for a period of time. For example, an interest value is generated by weighting according to content browsed by the user. Tags with high browsing frequency, or tags with long browsing time are configured as the user's interested tags. The content corresponding to the user's interested tags is pushed to the mobile terminal.

In a fourth embodiment, an interface for setting uninterested content can be provided on content display interface of the mobile terminal. If the user sets no interest in content in the interface, related content will not be pushed to the user or push of the related content will be reduced. For example, each piece of news is provided with a button for uninterested under news website of the browser. If the user clicks on the button, it means the user is uninterested in the news or such news, thus the news or such news will be no longer pushed to the mobile terminal.

After research, inventors found that in the above-mentioned embodiments, the user may continue to be pushed content that the user is uninterested in, or the user may miss the content that the user is interested in. For example, in the first embodiment above, the user may no longer be interested in content corresponding to some of initially selected interested tags during a long period of time, but the tags will still be used as the user's interested tags, and the user will be pushed relevant content. In the above-mentioned second embodiment, although the user can select the tags that the user is interested in on the tag selection interface, the user may not be able to determine whether he or she is interested in the content corresponding to the tags only from category name corresponding to the tag in the tag selection interface, and content that the user is interested in may not be selected accurately through the tags. Thus, in the embodiment, content pushed to the user may not be the content that the user is interested in. In the third embodiment, although the content that the user is interested in is pushed according to the content browsed by the user, if the user does not search and browse some content that the user will be interested in, relevant content will not be pushed to the user. Thus some users' interested content will be missed. Or if the user accidentally clicks on some content that the user is uninterested in, and the content that the user is uninterested in will continue to be pushed to the user, resulting in inaccurate push and affecting user's browsing experience. In the fourth embodiment, although the user can directly set uninterested under the uninterested content, the user can only set for a single piece of content or a category, and other content that the user is uninterested in will still be pushed to the user.

Therefore, some embodiments of the present disclosure provide a content recommendation method, an apparatus, a mobile terminal and a server. In combination with content that the user has browsed and tags selected by the user before, the user can be provided with a tag list, so that the user can select the tags that the user is interested in according to tags the user has selected last time and recently browsed content. Then the content is pushed according to the tags selected by the user, so that the pushed content is more accurate and less content that the user may be interested in are omitted.

The content recommendation method, the apparatus, the mobile terminal and the server provided by the embodiment of the present disclosure can be realized through interaction between the server and the mobile terminal. The server generates a tag list for the user to select according to the user's browsing and the previously selected tags and sends the tag list to the mobile terminal. The mobile terminal displays the tag list to enable the user to select. The mobile terminal returns user's selection results to the server. Thus, the server can push according to the user's selection.

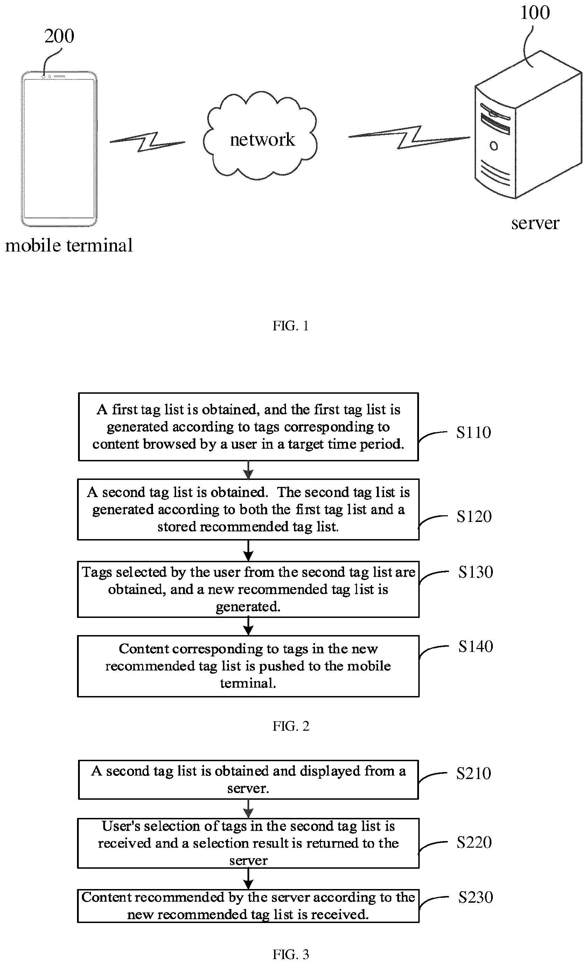

FIG. 1 shows an interaction diagram between a server 100 and a mobile terminal 200 in some embodiments of the present disclosure. As shown in FIG. 1, the mobile terminal 200 interacts with the server 100 through a network. The network may be a wireless network or a wired network. In the present disclosure, the mobile terminal 200 can be mobile phone, tablet computer, computer, e-reader, wearable electronic equipment, vehicle equipment or other intelligent devices, and there are no specific limitations here.

The mobile terminal 200 can run a client, and the server 100 can run a service terminal. For example, in the present disclosure, the mobile terminal 200 runs a browser or various apps for content browsing, and the like. The user can browse the content through the client. The server 100 runs the service terminal corresponding to the client. The client running in the mobile terminal can perform methods corresponding to the mobile terminal in the embodiment of the present disclosure. The service terminal corresponding to the server can be configured to perform methods corresponding to the server in the embodiment of the present disclosure. Based on the above network environment, the client can interact with the server 100 through the network to realize data interaction with the service terminal running on the server 100.

The content recommendation method, the apparatus, the mobile terminal and the server provided by the embodiment of the present disclosure will be described in detail in combination with the attached drawings and specific embodiments.

FIG. 2 shows a content recommendation method provided by some embodiments of the present disclosure. The content recommendation method can be applied to a server. In the embodiments, the method is not only applied to the server, but also can be applied to a mobile terminal, and the like. The server is taken as an example in the present disclosure. As shown in FIG. 2, the method includes the followings.

At block S110, a first tag list is obtained, and the first tag list is generated according to tags corresponding to content browsed by a user in a target time period.

The user browses content through the mobile terminal. The content browsed by the user is respectively corresponding to a tag. Thus, the tags corresponding to the content browsed by the user in the target time period can be obtained. The first tag list is generated according to the tags corresponding to the content browsed by the user in the target time period. The first tag list includes one or more tags, and each tag represents content of a category.

At block S120, a second tag list is obtained. The second tag list is generated according to both the first tag list and a stored recommended tag list.

A recommended tag list can be stored in the server. The recommended tag list is a basis for the server to push the content to the mobile terminal. In other words, the recommended tag list includes one or more tags. The server pushes content corresponding to tags in the recommended tag list to the mobile terminal.

The server may generate the second tag list based on tags in the first tag list and tags in the stored recommended tag list. In other words, the second tag list includes the tags in the first tag list and the tags in the recommended tag list.

At block S 130, tags selected by the user from the second tag list are obtained, and a new recommended tag list is generated.

The second tag list is a tag list provided to the user for selection, that is, the user can select tags that the user is interested in from the second tag list. A tag selected by the user from the second tag list indicates that the user is interested in content corresponding to the tag, and the content corresponding to the tag can be pushed to the user. Therefore, the server can obtain the tags selected by the user from the second tag list, and generate the new recommended tag list. The new recommended tag list can replace previously stored recommended tag list serving as a basis for pushing the content to the mobile terminal.

At block S 140, content corresponding to tags in the new recommended tag list is pushed to the mobile terminal.

When the server pushes the content to the mobile terminal, the content corresponding to the tags in the new recommended tag list is pushed. That is to say, when the content is pushed to the mobile terminal, content related to categories corresponding to user's latest selected tags that the user is interested in is pushed.

In the embodiment of the present disclosure, the content can be pushed to the mobile terminal according to the new recommendation list when the new recommendation list is generated, or the content can be pushed to the mobile terminal at other times after the new list is generated. That is to say, time for performing operations at block S140 may have a certain interval with time for performing operations at block S 130, and an interval is not limited. Besides, after obtaining the new recommended tag list, when the content is recommended to the user, the content corresponding to the new recommended tag list is pushed until a recommended tag list is regenerated.

In addition, if the content recommendation method provided by the embodiment of the present disclosure is applied to the mobile terminal, the mobile terminal can store the recommended tag list and obtain the first tag list from the server. Then, the second tag list is generated according to the first tag list and the stored recommended tag list. When the user selects tags in the second tag list, the new recommended tag list will be generated according to the user's selection. The mobile terminal can obtain content from the server according to the new recommended tag list for display and push.

In the embodiment of the present disclosure, the second tag list is generated as the basis for the user to select tags according to the tags corresponding to the content browsed by the user in the target time period and the tags stored in the recommended tag list. The second tag list includes not only the tags that the user is interested in previously selected by the user, but also recently browsed tags that users may be interested in, thus minimizing omission of the tags that the user may be interested in. Further more, the user can delete the tags that the user is interested in previously selected. Accuracy and completeness of tags in the recommended tag list can be improved and push effects can be improved.

FIG. 3 shows a content recommendation method provided by some embodiments of the present disclosure. The content recommendation method is applied to a mobile terminal. As shown in FIG. 2, the method includes the followings.

At block S210, a second tag list is obtained and displayed from a server. The second tag list is generated according to both a first tag list and a stored recommended tag list. The first tag list is generated according to tags corresponding to content browsed by a user in a target time period.

The mobile terminal can obtain the second tag list from the server for the user to select tags. The second tag list is generated by the server according to the first tag list and a recommended tag list stored by the server.

Specifically, the mobile terminal displays the second tag list, specifically displays the tags in the second tag list, and provides selection authority for each tag. The user can select displayed tags, that is, the user can select according to whether a tag is the tag that the user is interested in.

At block S220, user's selection of tags in the second tag list is received and a selection result is returned to the server and the server is indicated to generate a new recommended tag list based on the selection result.

When the user makes selection in the mobile terminal, the mobile terminal receives the user's selection of the tags in the second tag list. After the user selects the tags in the second tag list, the mobile terminal can return the selection result to the server. The selection result includes user's selection information, that is, the user can know which tags in the second tag list are selected as interested tags through the selection result. Therefore, the server can generate the new recommended tag list based on tags selected by the user in the selection result.

At block S230, content recommended by the server according to the new recommended tag list is received.

When the server pushes content to the mobile terminal according to the new recommended tag list, the mobile terminal is configured to receive content pushed by the server. It is understood that time for executing operation at block S230 may have a certain interval with time for executing operation at block S220, and the interval is not limited. That is, the mobile terminal returns the selection result to the server, and the server generates the new recommended tag list. The mobile terminal may receive the content pushed by the server according to the new recommended tag list. Or when an associated application is opened in the mobile terminal next time, the content pushed by the server is received.

In the embodiment of the present disclosure, the second tag list provided by the mobile terminal to the user for selection includes the tags corresponding to the content browsed by the user in the target time period and tags previously selected by the user. Thus the user can select tags more perfectly. Accuracy and completeness of tags in the recommended tag list can be improved and push effects can be improved.

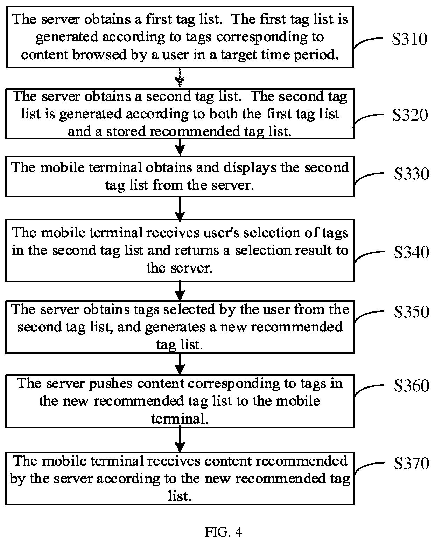

As shown in FIG. 4, a content recommendation method is provided by some embodiment of the present disclosure. The content recommendation method is applied to a content recommendation system. The content recommendation system, as shown in FIG. 1, includes a mobile terminal and a server interacting with each other. As shown in FIG. 4, the method includes the followings.

At block S310, the server obtains a first tag list. The first tag list is generated according to tags corresponding to content browsed by a user in a target time period.

The server can obtain the tags corresponding to the content browsed by the user in the target time period according to the content browsed by the user in the target time period. The mobile terminal can be used as the user or a user account can be used as the user.

Specifically, in an embodiment, when the user opens a piece of content in the mobile terminal and starts browsing, the mobile terminal can feed back browsing information of the user to the server, such as which piece of content the user opens, when the user closes browsing the piece of content, and the like. Thus, the server can know what the user has browsed in the target time period, and then according to corresponding relationship between the content and the tag, the server can know which tag the user has browsed in the target time period. A tag browsed by the user is the tag corresponding to the content browsed by the user.

In another embodiment, the mobile terminal can count which content corresponding to tags browsed by the user according to user's click on and off of the content and an operation in a content browsing interface, and then feed back statistical results to the server. Feedback can be periodic feedback, can be feedback when an corresponding application is closed, or can be feedback that the server actively obtain from the mobile terminal. If the mobile terminal initiates a request to update the recommended tag list to the server, the mobile terminal will feed back latest statistics of user's browsing of the tags to the server when the mobile terminal initiates the request to update the recommended tag list. Thus the server can obtain which tags the user has browsed in the target time period.

The server can select tags from the tags browsed by the user in the target time period to generate the first tag list. The server can select all the tags browsed by the user in the target time period to generate the first tag list, that is, the tags in the first tag list are the tags browsed by the user in the target time period. The server can also select some tags browsed by the user in the target time period to generate the first tag list, that is, the tags in the first tag list is part of the tags browsed by the user in the target time period.

In an embodiment, the server can also obtain user's browsing times for each tag. When content corresponding to a tag is opened for browsing once, and the tag can be counted to be browsed once. For example, the user browses content A, content B, content C and content D in the target time period, the content A corresponds to tag a, the content B corresponds to tag b, the content C corresponds to tag a, and content D corresponds to tag c. Then the user can obtain content corresponding to the tag a, the tag b and the tag c in the target time period. The tag a has been browsed twice, and the tag b and the tag c have been browsed once respectively.

The higher the user's browsing times for a tag, the more the user browses content related to a type corresponding to the tag, the more interested the user may be in the content related to the type corresponding to the tag. Therefore, alternatively, when the server selects some tags from the tags browsed by the user in the target time period and generates the first tag list, the first tag list can be generated by selecting tags with browsing times greater than the target times. Specific values of the target times are not limited in the embodiment of the present disclosure, and can be set according to actual situation.

Alternatively, in the case of insufficient user browsing, the number of tags with browsing times greater than the target times may be too small. If the first tag list is generated with the tags with browsing times greater than the target times, the tags in the first tag list may not be comprehensive. Therefore, obtained tags can be sorted from high to low according to the browsing times, and then the target number of tags can be selected from high to low according to a ranking result to generate the first tag list. For example, the target number is set to 10, and after sorting all the tags browsed by the user in the target time period from high to low by browsing times, 10 tags from high to low in the ranking result are selected to generate the first tag list.

Alternatively, in the embodiment of the present disclosure, the tag with browsing times greater than the target times can be selected from the obtained tags first. When the number of tags with browsing times greater than the target times is less than the target number, a certain number of tags can be selected from the obtained tags to supplement the target number according to the browsing times.

In an embodiment, the server can also know browsing time of each piece of content, hereafter counting browsing time corresponding to each tag. The browsing time corresponding to each tag can be the sum of browsing time of each piece of browsed content corresponding to the tag. For example, the user browses the content A, the content B and the content C in the target time period, the content A corresponds to tag a, the content B corresponds to tag b, and the content C corresponds to tag a. The content A is browsed for x minutes, the content B is browsed for y minutes, the content C is browsed for Z minutes. Then the user browses the tag A for x+z minutes and browses the tag B for y minutes in the target time period.

The longer the user browse a tag, the more the user browses content related to a type corresponding to the tag, the more interested the user may be in the content related to the type corresponding to the tag. Therefore, alternatively, when the server selects some tags from the tags browsed by the user in the target time period and generates the first tag list, the first tag list can be generated by selecting tags with browsing time greater than target time. Specific values of the target time are not limited in the embodiment of the present disclosure, and can be set according to actual situation.

Alternatively, in the case of insufficient the user browsing, the number of tags with browsing time greater than the target time may be too small. Therefore, if the first tag list is generated with the tags with browsing time greater than the target time, the tags in the first tag list may not be comprehensive. Therefore, the obtained tags can be sorted from high to low according to the browsing time, and then the first tag list can be generated by selecting the target number of tags from high to low according to a ranking result. For example, the target number is set to 10, and after sorting all the tags browsed by the user in the target time period from high to low according to the browsing time, 10 tags from high to low in the ranking result are selected to generate the first tag list.

Alternatively, in the embodiment of the present disclosure, the target time period may be a time period between time when the recommended tag list was generated last time and current time. That is, after the recommendation tag list was generated last time, content recommendation was made according to the recommendation tag list, and at the same time, the content browsed by the user was started to be recounted to obtain browsing situation of each tag.

Alternatively, in the embodiment of the present disclosure, the target time period may also be a pre-stored time period. That is, the target time period can be a stored length of time according to actual statistical requirements. The target time period represents a period before the current time. For example, if the target time period is one week, browsing situation of each tag in the week before the current time can be counted.

At block S320, the server obtains a second tag list. The second tag list is generated according to both the first tag list and a stored recommended tag list.

In the embodiment of the present disclosure, the first tag list is generated according to actual browsing content of the user, so that the first tag list can represent user's conscious or unconscious browsing preferences in the target time period. However, statistics of the first tag list may be omitted for types of content that the user has not browsed in the target period or browses less in the target time period. Besides, the statistics of the first tag list may also be omitted for content the user browses less but the user wants to be pushed subjectively. Therefore, in the embodiment of the present disclosure, the first tag list may also be combined with the stored recommended tag list to generate the second tag list for user selection.

In an embodiment, in order to make the tags coverage types more comprehensive, all the tags of the first tag list and all the tags of the recommended tag list can be selected to generate the second tag list.

Alternatively, in the embodiment, the first tag list and the recommended tag list can be combined as two sub tag lists respectively to generate the second tag list. The second tag list includes two sub tag lists, and tags in each sub tag list are adjacent to each other. That is, in the second tag list, tags in the first tag list are adjacent to each other and tags in the recommended tag list are adjacent to each other. Tags in each sub tag list are set to be displayed adjacent to each other, and two sub tag lists are adjacent to each other. Two sub tag categories can also be set to be displayed as tag list names respectively, which is convenient for users to distinguish.

Alternatively, in the embodiment, all the tags in the first tag list and all the tags in the recommended tag list can be sorted by browsing times or browsing time to generate the second tag list. Sorting can be from high to low, which is convenient for the user to select interested content. The sorting can also be from low to high, and is not limited in the embodiment of the present disclosure.

In an embodiment, in order to reduce user's selection burden, the second tag list can also be generated by selecting some tags from the recommended tag list and the tags from the first tag list. Standards for selecting the tags from the recommended tag list are not limited. The tags with browsing times greater than the predetermined times can be selected, or the tags with browsing time greater than the predetermined time can be selected. Or tags can be the specified number of tags with the largest number of browsing times, or the specified number of tags with the largest browsing time.

In an embodiment, in order to reduce probability of missing selection of hot content types, after selecting the tags in the first tag list and the recommended tag list, a tag with big data statistics can be added to generate the second tag list. The tag with the big data statistics corresponds to a type of most users preferences. Specifically, the server can count browsing information of all users, and obtain the total number of browsing times or the total number of browsing time of each tag browsed by all users. A certain number of tags with highest browsing times or longest browsing time are added to a selection result of the first tag list and the recommended tag list as the tag with big data statistics.

In an embodiment of the present disclosure, in order to facilitate user's selection, improve speed of user's selection and convenience of selection, some tags in the second tag list can be set as selected tags. The selected tags indicate that the user selects the tag by default. If the user does not deselect the selected tags, the selected tags will be used as the tags selected by the user to generate the recommended tag list.

Alternatively, since the higher the browsing times of the tag is, the more likely the user is interested. Therefore, a tag in the second tag list with browsing times greater than the specified times can be set as the selected tag. Specific values of the specified times are not limited in the embodiment of the present disclosure.

Alternatively, since the longer the browsing time of the tag is, the more likely the user is interested, a tag in the second tag list with browsing time greater than specified time can be set as the selected tag. Specific values of the specified time are not limited in the embodiment of the present disclosure.

In the embodiment of the present disclosure, the recommendation tag list generating the second tag list together with the first tag list is a recommendation tag list stored in the server. The stored recommended tag list is the recommended tag list obtained and stored last time. The stored recommended tag list is configured as a standard for pushing content to mobile terminals. That is, before the new recommended tag list is obtained, the server pushes the content to the mobile terminal according to the recommended tag list obtained last time. Of course, the stored recommended tag list can be obtained based on a previous recommended tag list and content browsed by the user in a previous target time period. If a mobile terminal is used as a user, when an application first connects to the server at the mobile terminal, there are no previous recommended tag list and user's browsing records. Under these circumstances, a plurality of tags can be pushed to the mobile terminal for the user to select to generate the first recommended tag list according to the user's selection. If a user account is taken as a user, when the an application logs in for the first time in a user account, there are no previous recommended tag list and user's browsing records. Under these circumstances, a plurality of tags can be pushed to the mobile terminal for users to select to generate the first recommended tag list according to the user's selection.

The server sends the second tag list to the mobile terminal so that the mobile terminal displays the second tag list to the user for selection.

At block S330, the mobile terminal obtains and displays the second tag list from the server. The second tag list is generated according to both the first tag list and the stored recommended tag list. The first tag list is generated according to the tags corresponding to the content browsed by the user in the target time period.

The mobile terminal can obtain the second tag list generated by the server. The mobile terminal displays the second tag list so that the user can select tags from the second tag list.

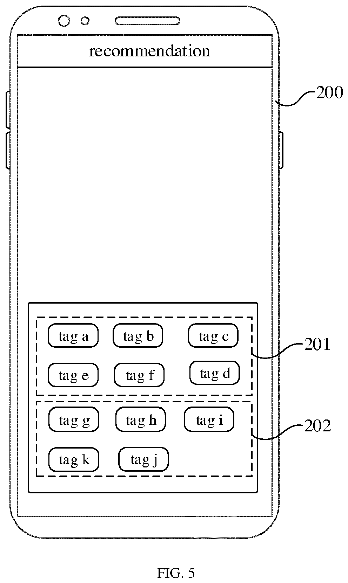

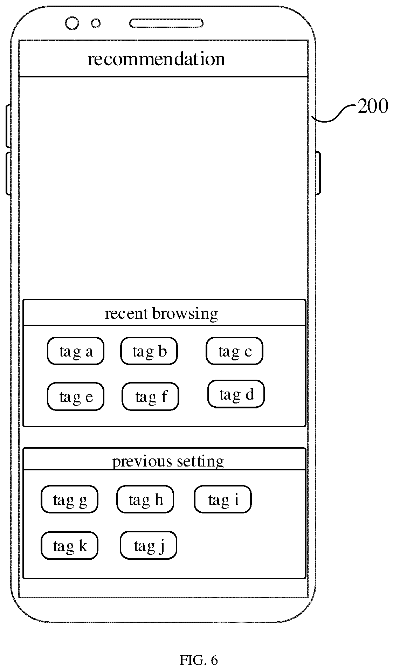

Display of the mobile terminal for the tags of the second tag list can be consistent with a display way of the second tag list set in the server. For example, the second tag list includes two sub tag lists, and the tags in each sub tag list are adjacent to each other. If the tags in each sub tag list are set to be displayed adjacent to each other, and two sub tag lists are adjacent to each other, display of the second tag list can be as shown in FIG. 5. Tags in dotted box 201 represents the tags in the first tag list, and tags in dotted box 202 represents the tags in the previous recommended tag list. It is understood that dotted boxes may not be displayed in the mobile terminal. If two sub tag categories are set to be displayed as tag list names respectively, display can be as shown in FIG. 6. The tag list names are not limited in the embodiment of the present disclosure. For example, "recent browsing" in FIG. 6 indicates the first tag list, and "previous setting" represents the recommended tag list obtained last time.

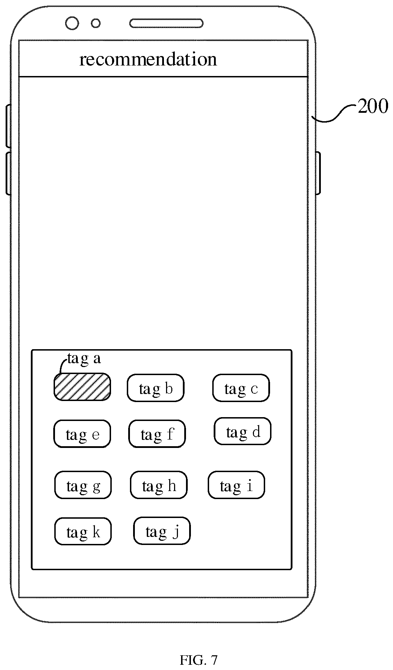

In the embodiment of the present disclosure, if the second tag list received by the mobile terminal includes a tag set as selected, when the second tag list is displayed, the tag set as selected can be displayed in the form of selected tag display, such as highlighting or graying, to be distinguished from unselected tag display. For example, as shown in FIG. 7, if the tag a is set to be selected by default on the server, the tag a is displayed in the mobile terminal as the selected tag in the form of gray.

At block S340, the mobile terminal receives user's selection of tags in the second tag list and returns a selection result to the server and the server is indicated to generate a new recommended tag list based on the selection result.

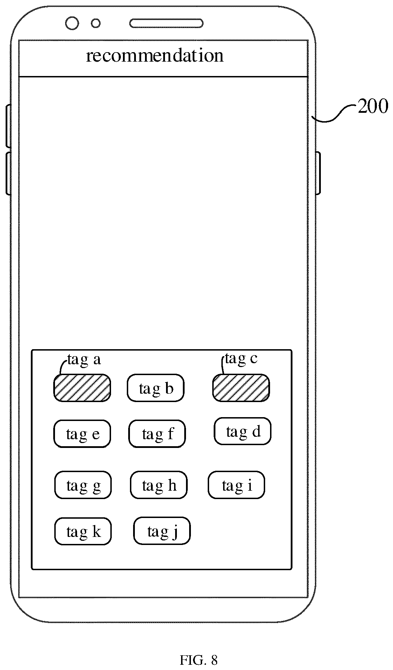

The user can select tags the user is interested in from the second tag list displayed by the mobile terminal. The mobile terminal receives the user selects a tag. If the tag is an unselected tag, the tag will be set as a selected tag. Besides, the tag selected by the user can be displayed as the selected tag. As shown in FIG. 8, if the user clicks on the tag c, the tag c is set to the selected tag.

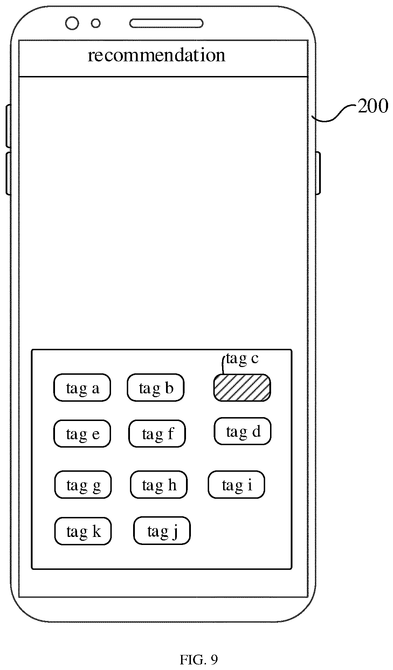

The user can also deselect the selected tag. For example, if the user clicks on the selected tag, the selected tag is set as an unselected tag. For example, if the user clicks on the tag a shown in FIG. 8 again, the tag a is set as an unselected tag as shown in FIG. 9.

That is, if the mobile terminal receives a selection operation for the selected tag, the selected tag is set as the unselected tag. If the mobile terminal receives a selection operation for the unselected tag, the unselected tag is set as the selected tag.

When the user finishes selection, the mobile terminal returns the selection result to the server. In some embodiments, the selection result can be returned to the server when the mobile terminal receives an instruction of finishing selection triggered by the user.

In an embodiment, the mobile terminal can return all the tags in the second tag list to the server, and a set parameter for the tag selected by the user to be distinguished from the unselected tag, so that the server can identify the tag selected by the user from the tags returned by the mobile terminal.

Alternatively, in the embodiment, the mobile terminal may add a selection identification to the tag selected by the user in the second tag list. The mobile terminal returns a second tag list with the selection identification to the server for indicating the server to generate a new recommended tag list through a tag with the selection identification.

Alternatively, in the embodiment, the second tag list can also be divided into a selected tag sub list and an unselected tag sub list. And the tags selected by the user is put into the selected tag sub list, and the tag unselected by the user is put into the unselected tag sub list. Thus, the server receiving the second tag list returned by the mobile terminal can read only the tags in the selected tag sub list to obtain the tag selected by the user.

In an embodiment, in order to reduce the amount of data transmission and reduce transmission energy consumption, the mobile terminal can discard tags unselected by the user in the second tag list, and only return selected tags to the server.

At block S350, the server obtains tags selected by the user from the second tag list, and generates a new recommended tag list.

After sending the second tag list to the mobile terminal, the server may receive the selection result returned by the mobile terminal and can obtain the tags selected by the user from the second tag list according to the selection result. For example, if the mobile terminal returns all the tags in the second tag list, the server reads the tags selected by the user. If the mobile terminal returns only the tags selected by the user, all received tags will be regarded as the tags selected by the user from the second tag list.

The server can generate the new recommended tag list from the tags selected by the user in the selection result. Specifically, the server generates a tag list selected by all users. The tag list is used as the new recommended tag list to replace the recommendation tag list generated last time. The new recommendation tag list is stored as a standard for subsequent content recommendation.

It can be understood that in the embodiment of the present disclosure, there is not necessarily a strict sequence of operations between operations performed by the server and operations performed by the mobile terminal, and there may be certain intersection. For example, S350 includes a plurality of sub operations: sending the second tag list to the mobile terminal and indicating the mobile terminal to provide the tags in the second tag list to the user for selection; receiving a selection result returned by the mobile terminal according to selection operation of the user; generating the new recommended tag list from the tags selected by the user according to the selection result. Sub operation of sending the second tag list to the mobile terminal is executed before operations at block S330. Two sub operations of receiving a selection result returned by the mobile terminal according to selection operation of the user and generating the new recommended tag list from the tags selected by the user according to the selection result are executed after operations at block S340.

At block S360, the server pushes content corresponding to tags in the new recommended tag list to the mobile terminal.

When content is required to be pushed to the mobile terminal, the server pushes the content corresponding to the tags in the new recommended tag list.

Time for the server to push the content to the mobile terminal is not limited.

Alternatively, a push is made when the new recommended tag list is generated.

Alternatively, the content can be periodically pushed to the mobile terminal according to a latest recommended tag list. Specific push cycle is not limited in the embodiment of the present disclosure.

Alternatively, the push can also be made according to a content recommendation request of the mobile terminal. For example, the server receives a content recommendation request sent by the mobile terminal. According to the content recommendation request, content corresponding to the recommendation tag list is searched. Content corresponding to the latest recommended tag list is searched. Searched content is returned to the mobile terminal.

Alternatively, the content can also be pushed according to the recommended tag list when an application related to the recommended tag list is opened; or when an account of the application related to the recommended tag list is logged in, the content can be pushed according to the recommended tag list.

The number and way of content pushed by the server to the mobile terminal each time are not limited in the embodiment of the present disclosure, and can be subject to a common push method of related technologies.

For example, in the embodiment of the present disclosure, alternatively all content generated between last push and current push may be pushed each time the content is pushed.

Alternatively, there may be more content corresponding to the tags in the recommended tag list. The number of pieces of content that the mobile terminal can display each time is limited, and the target number of pieces of content can be pushed to the mobile terminal each time the content is pushed. Or content in last period of time is pushed each time, specific time length of the last period is not limited. Or, the content is pushed to mobile terminal from near to far in batches according to generation time of the content. When the mobile terminal receives and displays a batch of content, next batch of the content is pushed to the mobile terminal.

At block S370, the mobile terminal receives content recommended by the server according to the new recommended tag list.

The server sends pushed content to the mobile terminal and the mobile terminal receives accordingly. The mobile terminal will display received content.

Content corresponding to a tag received by the mobile terminal from the server can be part of content information, such as title, introduction or beginning content. When the mobile terminal receives trigger of content, such as clicking on, opening and the like, the mobile terminal initiates a request to the server to obtain the content. The server then sends complete information corresponding to the content to the mobile terminal, and the mobile terminal displays the complete information.

In the embodiment of the present disclosure, the second tag list is generated according to the stored recommended tag list and the content browsed by the user. The user can select the interested tags from the second tag list, so that basis for user's selection is based on recent browsing results and previous selection, making optional benchmark more comprehensive and accurate. Thus, the new recommended tag list generated according to the selection result is more comprehensive and accurate. When the content is pushed to the user, not only the content that the user is interested in is pushed to the user, but also the content that the user is uninterested in is eliminated, thus improving push effects.

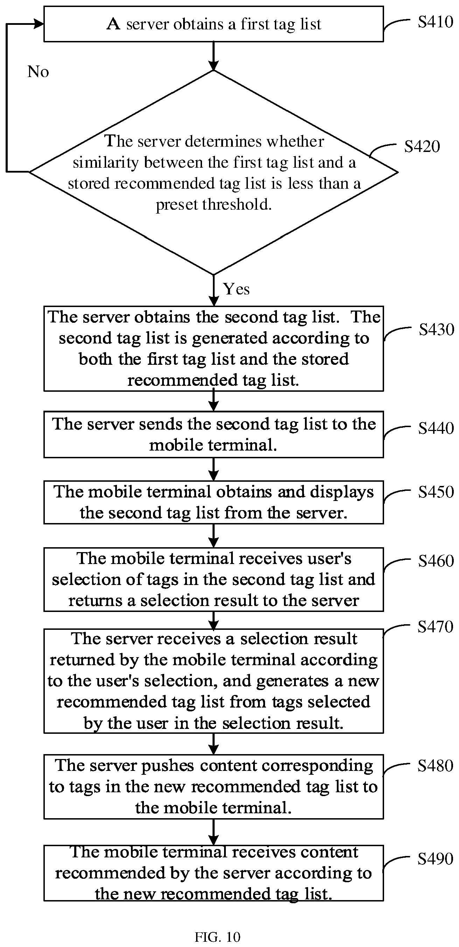

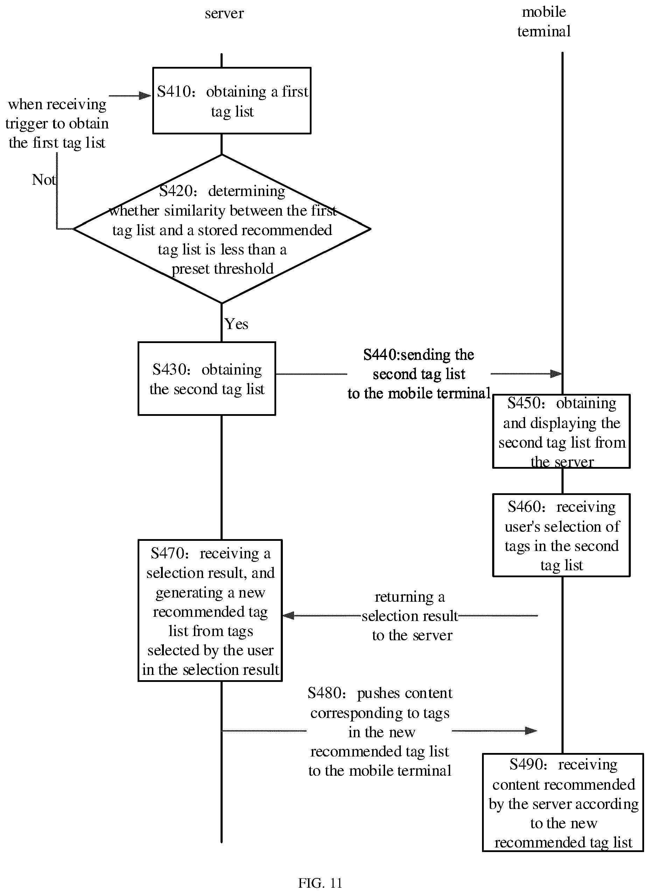

FIGS. 10 and 11 show a content recommendation method provided by some embodiments of the present disclosure and the content recommendation method is applied to the content recommendation system as shown in FIG. 1. The method can also determine whether to update the recommended tag list according to changes of the user's preferences. Specifically, as shown in FIGS. 10 and 11, the method includes the followings.

At block S410, a server obtains a first tag list. The first tag list is generated according to tags corresponding to content browsed by a user in a target time period.

The server obtains the first tag list and generate a recommended tag list. Specific time when the server obtains the first tag list is not limited in the embodiment of the present disclosure. Trigger conditions for obtaining the first tag list may be one or more of the following.

Alternatively, the server can obtain the first tag list when receiving a request for updating the recommendation tag list from a mobile terminal. The request for updating the recommendation tag list can be initiated by mobile terminal when the mobile terminal receives an operation of updating the recommendation tag list triggered by the user.

Alternatively, the server can periodically obtain the first tag list.

Alternatively, the server can also update the first tag list under other trigger conditions. For example, the amount of content browsed by the user, or browsing time, and the like reaches a first predetermined value, indicating that the user browses the content more and new interested tags may be generated. The first tag list can be obtained to generate a new recommended tag list. Or the amount of content browsed by the user, or browsing time within predetermined time is less than a second predetermined value, indicating that content currently recommended may not be content that the user is interested in, and the user browses the content less. Therefore, the first tag list can be obtained and a new recommended tag list can be generated.

At block S420, the server determines whether similarity between the first tag list and a stored recommended tag list is less than a preset threshold. If so, operations at block S430 is performed; if no, operations at block S410 is performed.

If the similarity between the first tag list and the stored recommended tag list is greater than or equal to the preset threshold, the first tag list is similar to the stored recommended tag list, indicating that the user's preferences for recent browsing types are similar to types recommended by the server, and the recommended tag list may not be updated. Furthermore, when the first tag list needs to be obtained next time, operations at block S410 are executed.

If the similarity between the first tag list and the stored recommended tag list is less than the preset threshold, it means that the user's preferences for recent browsing types are different from the types recommended by the server to a certain extent. It is necessary to update the recommended tag list. Operations of obtaining the second tag list at block S430 are performed.

Alternatively, in the embodiment of the present disclosure, if the server obtains the first tag list when receiving a request for updating the recommended tag list initiated by the mobile terminal, and the request for updating the recommended tag list is initiated by the user on the mobile terminal, it indicates the user wants to update the recommended tag list. Under these circumstances, no matter how similar the first tag list is to the stored recommended tag list, operations of obtaining the second tag list according to both the first tag list and the stored recommendation tag list of stored at block S430 are performed.

That is, alternatively, the server can determine whether the trigger condition for obtaining the first tag list is the request for updating the recommended tag list initiated by the user through the mobile terminal. If so, operations of obtaining the second tag list are performed.

In the embodiment of the present disclosure, measurement methods of the similarity between the first tag list and the stored recommended tag list are not limited. For example, it may be proportion of same tags in the first tag list and the recommended tag list to total tags in the first tag list. If the proportion is less than preset proportion, the similarity between the first tag list and the stored recommended tag list is determined to be less than the preset threshold. Specific values of the preset threshold are not limited, and can be adjusted according to specific recommended requirements, such as 80% and 90%, and the like.

At block S430, the server obtains the second tag list. The second tag list is generated according to both the first tag list and the stored recommended tag list.

At block S440, the server sends the second tag list to the mobile terminal.

At block S450, the mobile terminal obtains and displays the second tag list from the server. The second tag list is generated according to both the first tag list and the stored recommended tag list. The first tag list is generated according to the tags corresponding to the content browsed by the user in the target time period.

At block S460, the mobile terminal receives user's selection of tags in the second tag list and returns a selection result to the server and the server is indicated to generate a new recommended tag list based on the selection result.

At block S470, the server receives a selection result returned by the mobile terminal according to the user's selection, and generates a new recommended tag list from tags selected by the user in the selection result.

At block S480, the server pushes content corresponding to tags in the new recommended tag list to the mobile terminal.

At block S490, the mobile terminal receives content recommended by the server according to the new recommended tag list.

In the embodiment of the present disclosure, if the first tag list is similar to the stored recommended tag list, there is no significant difference between user's preferences for recent content types and user's preferences for content types when the recommended tag list was determined last time, and the recommended tag list may not be updated temporarily. When the similarity between the first tag list and the stored recommended tag list is less than the preset threshold, the recommended tag list can be updated to reduce unnecessary updating of the recommended tag list, hereafter pushing the content to users more comprehensively and accurately, and saving the recommended resources.

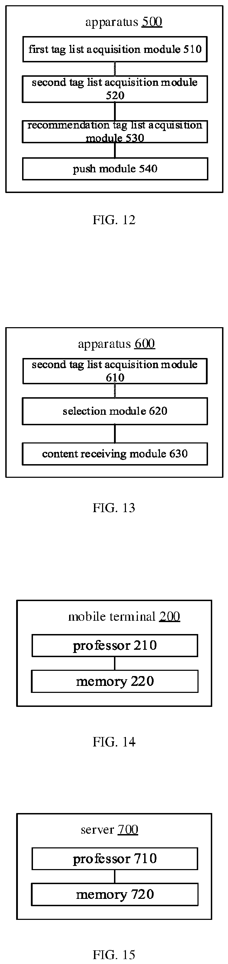

Some embodiments of the present disclosure also provide a content recommendation apparatus 500. The content recommendation apparatus can be applied to a server. Of course, application of the content recommendation apparatus to the server is not excluded in the embodiment of the present disclosure. Specifically, as shown in FIG. 12, the content recommendation apparatus 500 includes a first tag list acquisition module 510 configured to obtain a first tag list, wherein the first tag list is generated according to tags corresponding to content browsed by the user in a target time period, a second tag list acquisition module 520 configured to obtain a second tag list, wherein the second tag list is generated according to both the first tag list and a stored recommended tag list, a recommendation tag list acquisition module 530 configured to obtain tags selected by the user from the second tag list and generate a new recommendation tag list and a push module 540 configured to push content corresponding to tags in the new recommended tag list to the mobile terminal.

Alternatively, in the present disclosure embodiment, the first tag list acquisition module 510 may include a tag acquisition unit configured to obtain tags corresponding to the content browsed by the user in the target time period, and a first tag list generating unit configured to select tags with browsing times greater than target times from the obtained tags to generate the first tag list.

Alternatively, the first tag list acquisition module 510 may include a tag acquisition unit configured to obtain tags corresponding to the content browsed by the user in the target time period, and another first tag list generating unit configured to generate the first tag list by selecting the target number of tags from obtained tags according to browsing times from high to low, and generate the first tag list.

Alternatively, in the embodiment of the present disclosure, the target time period may be a time period between the time when the recommended tag list was generated last time and current time.

Alternatively, in the embodiment of the present disclosure, the target time period may also be a pre-stored period.

Alternatively, in the embodiment of the present disclosure, a judgment module may also be included to determine whether similarity between the first tag list and the stored recommended tag list is less than a preset threshold. If so, the second tag list acquisition module 520 is configured to obtain a second tag list.

Alternatively, in the embodiment of the present disclosure, the second tag list acquisition module 520 may be configured to sort the tags in the first tag list and the tags in the recommended tag list according to the user's browsing times from high to low, and generate the second tag list.

Alternatively, in the embodiment of the present disclosure, the second tag list acquisition module 520 may also be configured to combine the first tag list and the recommended tag list as two sub tag lists respectively to generate the second tag list.

Alternatively, in the embodiment of the present disclosure, the second tag list acquisition module 520 may also be configured to set a tag in the second tag list with the user's browsing times greater than specified times as a selected tag.

Alternatively, in the embodiment of the present disclosure, the recommendation tag list acquisition module 530 may include a list sending unit configured to send the second tag list to the mobile terminal to indicate the mobile terminal to provide the tags in the second tag list to the user for selection, a selection the receiving unit configured to receive the selection result returned by the mobile terminal according to the user's selection, and a recommendation tag list generating unit configured to generate a new recommended tag list from the selected tags selected by the user in the selection results.

Alternatively, in the embodiment of the present disclosure, the push module 540 may include a request receiving unit configured to receive a content recommendation request sent by the mobile terminal, a search unit configured to search content corresponding to the new recommended tag list, and a content return unit configured to return searched content to the mobile terminal.

The embodiment of the present disclosure also provides a content recommendation apparatus 600. The content recommendation apparatus is applied to a mobile terminal. As shown in FIG. 13, the content recommendation apparatus 600 includes a second tag list acquisition module 610 configured to obtain and display a second tag list from a server, wherein the second tag list is generated according to both a first tag list and a stored recommended tag list, and the first tag list is generated according to tags corresponding to content browsed by the user in a target time period, a selection module 620 configured to receive user's selection of tags in the second tag list and return a selection result to the server to instruct the server to generate a new recommended tag list based on the selection result, and a content receiving module 630 configured to receive content recommended by the server according to the new recommended tag list.

Alternatively, the second tag list can include a tag set to be selected. If the selection module 620 receives a selection operation on a selected tag, the selection module 620 can be configured to set the selected tag as an unselected tag. If the selection module 620 receives a selection operation on an unselected tag, the selection module 620 can be configured to set the unselected tag as a selected tag.

Alternatively, the selection module 620 can be configured to return the selected tag to the server.

Alternatively, the selection module 620 may include an identification unit for adding a selection identification to the tag selected by the user in the second tag list, a tag return unit configured to return a second tag list with a selection identification to the server to indicate the server to generate a new recommended tag list by a tag with the selection identification.

In the embodiments of the present disclosure, various alternative embodiments can be implemented separately, or two or more can be simultaneously implemented on the basis of logic, or two or more can be implemented in combination with each other. simultaneously based on logic, or two or more embodiments are combined with each other, and the like. The embodiments of the resent disclosure are not limited.

Those skilled in the art can clearly understand that, for convenience and simplicity of description, the embodiments of the above methods can be mutually referenced. For example, for the specific working process of the described apparatus and module, refer to corresponding process in the embodiment of the above method, and will not be described here. For method embodiments corresponding to the above system, refer to method embodiments corresponding to the server and method embodiments corresponding to the mobile terminal. In addition, for the method embodiment corresponding to the server, refer to the description of the server in the method embodiment corresponding to the system, and the method embodiment corresponding to the mobile terminal can refer to the relevant description of the system in the method embodiment corresponding to the system.

In several embodiments provided by the present disclosure, coupling between modules may be electrical, mechanical or other forms of coupling.

In addition, each functional module in each embodiment of the present disclosure can be integrated into one processing module, each module can exist physically alone, or two or more modules can be integrated into one module. The above integrated modules can be implemented in a form of hardware function modules or in a form of software function modules.

As shown in FIG. 14, FIG. 14 shows a structural block diagram of a mobile terminal 200 provided by an embodiment of the present disclosure. The mobile terminal 200 may be an electronic device capable of running applications such as a smartphone, a tablet computer, a music playing apparatus, and the like. The electronic device includes one or more processors 210 (only one shown in the figure), a memory 220, and one or more programs. One or more programs are stored in the memory 220 and configured to be executed by one or more processors 210. One or more programs are configured to perform the methods described in the embodiments corresponding to the mobile terminal.

The processor 210 may include one or more processing cores. The processor 210 uses various interfaces and lines to connect all parts of the entire mobile terminal 200 respectively, and performs various functions and processing data of the mobile terminal 200 by running or executing instructions, programs, code sets or instruction sets stored in memory 220 and calling data stored in memory 220. Alternatively, processor 210 can be implemented in at least one hardware form in digital signal processing (DSP), field programmable gate array (FPGA), and programmable logic array (PLA). Processor 210 can integrate one or more combinations of central processing unit (CPU), graphics processing unit (GPU) and modem. CPU mainly deals with operating system, user interface and application program and the like., GPU is configured to render and draw display content, and modem is configured to handle wireless communication. It is understood that the above modem may also be implemented individually by a single communication chip without being integrated into the processor 210.

The memory 220 may include random access memory (RAM) or read only memory (ROM). The memory 220 may be configured to store instructions, programs, codes, code sets, or instruction sets. The memory 220 may include a storage program area and a storage data area. The storage program area may store an instruction for implementing an operating system, an instruction for achieving at least one function, an instruction for implementing embodiments of the above methods, and the like. The storage data area can also be configured to store data (such as telephone book, audio and video data, chat record data) created by electronic devices.

In addition, the mobile terminal 200 may also include a display screen configured to display tags and content. The display can be a touch screen for users to select tags through the display.

As shown in FIG. 15, an embodiment of the present disclosure also provides a server 700. The server 700 includes one or more processors 710, a memory 720, and one or more programs. One or more programs are stored in the memory 720 and configured to be executed by one or more processors 710 configured to perform the methods described in the relevant embodiments corresponding to the above server.

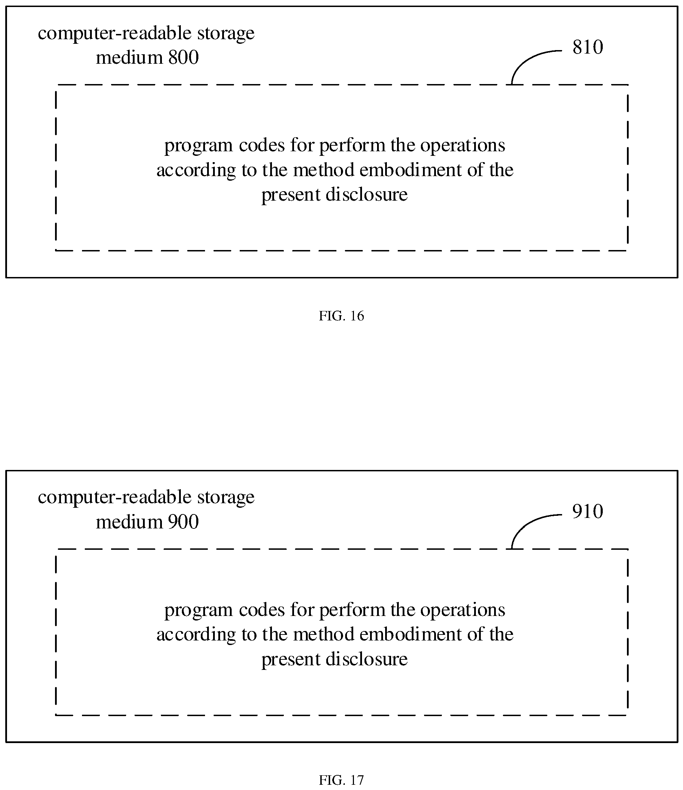

As shown in FIG. 16, FIG. 16 shows a structure block diagram of a computer-readable storage medium provided by an embodiment of the present disclosure. The computer-readable storage medium 800 stores program codes. The program codes can be called by the processor to execute the method described in the method embodiments corresponding to the mobile terminal.

The computer-readable storage medium 800 has a storage space for program codes 810 to perform any method operations in the method embodiments corresponding to the mobile terminal. The program codes can be read out from one or more computer program products or written to one or more computer program products. The program codes 810 may be compressed, for example, in an appropriate form.

The computer-readable storage medium 800 may be an electronic memory such as flash memory, electrically erasable programmable read-only memory (EEPROM), EPROM, hard disk or ROM. Alternatively, the computer-readable storage medium 800 includes a non-transitory computer-readable storage medium. Alternatively, the mobile terminal storing codes corresponding to the method described in the method embodiment corresponding to the mobile terminal may also be considered as the computer-readable storage medium 800 provided by the embodiment of the present disclosure.

In addition, as shown in FIG. 17, FIG. 17 shows a structure block diagram of a computer-readable storage medium provided by an embodiment of the present disclosure. The computer-readable storage medium 900 stores program codes. The program codes can be called by a processor to execute the method described in the method embodiment corresponding to the server.

The computer-readable storage medium 900 has storage space for program codes 910 to perform any method operations in the method embodiments corresponding to the server. The program codes can be read out from one or more computer program products or written to one or more computer program products. The program code 910 may be compressed, for example, in an appropriate form.

The computer-readable storage medium 900 may be an electronic memory such as flash memory, electrically erasable programmable read-only memory (EEPROM), EPROM, hard disk or ROM, for storing the program codes 910 to perform any of the methods described above. Alternatively, the computer-readable storage medium 900 includes a non-transitory computer-readable storage medium. Alternatively, any medium such as a server, cloud disk, an the like storing codes corresponding to the methods described in the method embodiment of the server can be considered as the computer-readable storage medium 900 provided by the embodiment of the present disclosure.

The scope of protection is defined by the claims.

## Claims

1. A content recommendation method performed by a sever (700), **characterized by** comprising:
obtaining (S110) a first tag list, wherein the first tag list is generated by the server (700) according to tags corresponding to content browsed by a user in a target time period; and the first tag list comprises one or more tags, and each tag represents a category of content;
obtaining (S 120) a second tag list, wherein the second tag list is generated by the server (700) according to both the first tag list and a recommended tag list stored in the server (700); wherein the recommended tag list stored in the server (700) comprises one or more tags, each tag represents a category of content, and the second tag list comprises one or more tags in the first tag list and one or more tags in the recommended tag list stored in the server (700);
obtaining (S 130) tags selected by the user through a mobile terminal from the second tag list, and generating a new recommended tag list based on the tags selected by the user; wherein the new recommended tag list is stored in the server (700) and replaces the recommended tag list previously stored in the server (700); and
pushing (S140) content corresponding to tags in the new recommended tag list to a mobile terminal.

2. The method as claimed in claim 1, wherein the obtaining (S110) a first tag list comprises:
obtaining the tags corresponding to the content browsed by the user in the target time period;
selecting tags with browsing times greater than target times from obtained tags, and generate the first tag list.

3. The method as claimed in claim 1, wherein the obtaining (S110) a first tag list comprises:
obtaining the tags corresponding to the content browsed by the user in the target time period;
selecting the target number of tags from the obtained tags according to browsing times from high to low, and generating the first tag list.

4. The method as claimed in any one of claims 1 to 3, wherein the target time period is a time period between time when the recommended tag list was generated last time and current time.

5. The method as claimed in any one of claims 1 to 3, wherein the target time period is a pre-stored time period.

6. The method as claimed in any one of claims 1 to 5, wherein before obtaining (S 120) a second tag list, the method further comprises:
determining whether similarity between the first tag list and the stored recommended tag list is less than a preset threshold value;
in response to the answer being yes, performing operations of obtaining the second tag list.

7. The method as claimed in any one of claims 1 to 6, wherein the obtaining (S120) a second tag list comprises:
sorting tags in the first tag list and tags in the recommended tag list from high to low according to user's browsing times, and generating the second tag list.

8. The method as claimed in any one of claims 1 to 6, wherein the obtaining (S120) a second tag list comprises:
combining the first tag list and the recommended tag list as two sub tag lists respectively and generating the second tag list.

9. The method as claimed in any one of claims 1 to 8, wherein before obtaining (S130) tags selected by the user from the second tag list, the method further comprises:
setting a tag in the second tag list with user's browsing times greater than specified times as a selected tag.

10. The method as claimed in any one of claims 1 to 9, wherein the obtaining (S130) tags selected by the user from the second tag list, and generating a new recommended tag list comprises:
sending the second tag list to the mobile terminal and indicating the mobile terminal to provide tags in the second tag list to the user for selection;
receiving a selection result returned by the mobile terminal according to selection of the user;
generating the new recommended tag list from tags selected by the user in the selection result.

11. The method as claimed in any one of claims 1 to 10, wherein the pushing (S 140) content corresponding to tags in the new recommended tag list to a mobile terminal comprises:
receiving a content recommendation request sent by mobile terminal;
searching content corresponding to the new recommended tag list;
returning searched content to the mobile terminal.

12. A server (700), comprising:
one or more processors (710);
a memory (720); and
one or more programs, wherein the one or more programs are stored in the memory and configured to be executed by the one or more processors, and **characterized in that** the one or more programs are configured to perform the method as claimed in any one of claims 1-11.

13. A mobile terminal, comprising:
one or more processors;
a memory; and
one or more programs, wherein the one or more are stored in the memory and configured to be executed by the one or more processors, and **characterized in that** the one or more programs are configured to perform:
obtaining (210) and displaying a second tag list from a sever, wherein the second tag list is generated according to both a first tag list and a recommended tag list stored in the server (700), the second tag list comprises one or more tags in the first tag list and one or more tags in the recommended tag list stored in the server (700), the first tag list is generated according to tags corresponding to content browsed by a user in a target time period, and the first tag list comprises one or more tags, the recommended tag list stored in the server (700) comprises one or more tags and each tag represents a category of content;
receiving (220) user's selection of tags in the second tag list and returning a selection result to the server and indicating the server to generate a new recommended tag list based on the selection result; wherein the new recommended tag list is stored in the server (700) and replaces the recommended tag list previously stored in the server (700); and
receiving (230) content recommended by the server according to the new recommendation tag list.

14. A computer-readable storage medium (800), storing program codes (810), **characterized in that** the program codes (810) is called by a processor to execute the method as claimed in any one of claims 1-11.

## Patentansprüche

1. Inhaltsempfehlungsverfahren, das von einem Server (700) durchgeführt wird und **dadurch gekennzeichnet ist, dass** es Folgendes umfasst:
Erhalten (S110) einer ersten Tagliste, wobei die erste Tagliste vom Server (700) gemäß Tags erzeugt wird, die einem Inhalt entsprechen, der von einem Benutzer in einer Zielzeitperiode durchsucht wird; und die erste Tagliste ein oder mehrere Tags umfasst und jedes Tag eine Inhaltskategorie repräsentiert;
Erhalten (S120) einer zweiten Tagliste, wobei die zweite Tagliste vom Server (700) sowohl gemäß der ersten Tagliste als auch einer auf dem Server (700) gespeicherten empfohlenen Tagliste erzeugt wird; wobei die auf dem Server (700) gespeicherte empfohlene Tagliste ein oder mehrere Tags umfasst, jedes Tag eine Inhaltskategorie repräsentiert und die zweite Tagliste ein oder mehrere Tags in der ersten Tagliste und ein oder mehrere Tags in der auf dem Server (700) gespeicherten empfohlenen Tagliste umfasst;
Erhalten (S130) von Tags, die vom Benutzer über ein mobiles Endgerät aus der zweiten Tagliste ausgewählt werden, und Erzeugen einer neuen empfohlenen Tagliste auf Basis der vom Benutzer ausgewählten Tags;
wobei die neue empfohlene Tagliste auf dem Server (700) gespeichert wird und die zuvor auf dem Server (700) gespeicherte empfohlene Tagliste ersetzt; und
Pushen (S140) eines Inhalts, der Tags in der neuen empfohlenen Tagliste entspricht, zu einem mobilen Endgerät.

2. Verfahren nach Anspruch 1, wobei das Erhalten (S110) einer ersten Tagliste Folgendes umfasst:
Erhalten der Tags, die dem Inhalt entsprechen, der vom Benutzer in der Zielzeitperiode durchsucht wurde;
Auswählen von Tags mit Durchsuchungszeiten größer als Zielzeiten aus erhaltenen Tags und Erzeugen der ersten Tagliste.

3. Verfahren nach Anspruch 1, wobei das Erhalten (S110) einer ersten Tagliste Folgendes umfasst:
Erhalten der Tags, die dem Inhalt entsprechen, der vom Benutzer in der Zielzeitperiode durchsucht wurde;
Auswählen der Zielanzahl von Tags aus den erhaltenen Tags gemäß Durchsuchungszeiten von hoch bis niedrig und Erzeugen der ersten Tagliste.

4. Verfahren, nach einem der Ansprüche 1 bis 3, wobei die Zielzeitperiode eine Zeitperiode zwischen einer Zeit, zu der die empfohlene Tagliste zum letzten Mal erzeugt wurde, und einer aktuellen Zeit ist.

5. Verfahren nach einem der Ansprüche 1 bis 3, wobei die Zielzeitperiode eine vorab gespeicherte Zeitperiode ist.

6. Verfahren nach einem der Ansprüche 1 bis 5, wobei das Verfahren vor dem Erhalten (S120) einer zweiten Tagliste Folgendes umfasst:
Bestimmen, ob eine Ähnlichkeit zwischen der ersten Tagliste und der gespeicherten empfohlenen Tagliste kleiner ist als ein voreingestellter Schwellwert;
in Reaktion darauf, dass die Antwort ja ist, Durchführen von Operationen zum Erhalten der zweiten Tagliste.

7. Verfahren nach einem der Ansprüche 1 bis 6, wobei das Erhalten (S120) einer zweiten Tagliste Folgendes umfasst:
Sortieren von Tags in der ersten Tagliste und Tags in der empfohlenen Tagliste von hoch bis niedrig gemäß Durchsuchungszeiten eines Benutzers und Erzeugen der zweiten Tagliste.

8. Verfahren nach einem der Ansprüche 1 bis 6, wobei das Erhalten (S120) einer zweiten Tagliste Folgendes umfasst:
Kombinieren der ersten Tagliste bzw. der empfohlenen Tagliste als zwei Untertaglisten und Erzeugen der zweiten Tagliste.

9. Verfahren nach einem der Ansprüche 1 bis 8, wobei das Verfahren vor dem Erhalten (S130) von Tags, die vom Benutzer aus der zweiten Tagliste ausgewählt werden, Folgendes umfasst:
Einstellen eines Tags in der zweiten Tagliste mit Durchsuchungszeiten eines Benutzers größer als spezifizierte Zeiten als ein ausgewähltes Tag.

10. Verfahren nach einem der Ansprüche 1 bis 9, wobei das Erhalten (S130) von Tags, die vom Benutzer aus der zweiten Tagliste ausgewählt werden, und das Erzeugen einer neuen empfohlenen Tagliste Folgendes umfasst:
Senden der zweiten Tagliste an das mobile Endgerät und Anzeigen, dass das mobile Endgerät dem Benutzer Tags in der zweiten Tagliste zur Auswahl bereitstellen soll;
Empfangen eines Auswahlergebnisses, das vom mobilen Endgerät gemäß einer Auswahl des Benutzers zurückgegeben wird;
Erzeugen der neuen empfohlenen Tagliste aus den Tags im Auswahlergebnis, die vom Benutzer ausgewählt werden.

11. Verfahren nach einem der Ansprüche 1 bis 10, wobei das Pushen (S140) eines Inhalts, der Tags in der neuen empfohlenen Tagliste entspricht, zu einem mobilen Endgerät Folgendes umfasst:
Empfangen einer Inhaltsempfehlungsanforderung, die von einem mobilen Endgerät gesendet wird;
Durchsuchen eines Inhalts, der der neuen empfohlenen Tagliste entspricht;
Zurückgeben eines durchsuchten Inhalts an das mobile Endgerät.

12. Server (700), der Folgendes umfasst:
einen oder mehrere Prozessoren (710);
einen Speicher (720) und
ein oder mehrere Programme, wobei das eine oder die mehreren Programme im Speicher gespeichert und dazu ausgelegt sind, von dem einen oder den mehreren Prozessoren ausgeführt zu werden, und **dadurch gekennzeichnet, dass** das eine oder die mehreren Programme dazu ausgelegt sind, das Verfahren nach einem der Ansprüche 1-11 durchzuführen.

13. Mobiles Endgerät, das Folgendes umfasst:
einen oder mehrere Prozessoren;
einen Speicher und
ein oder mehrere Programme, wobei das eine oder die mehreren Programme im Speicher gespeichert und dazu ausgelegt sind, von dem einen oder den mehreren Prozessoren ausgeführt zu werden, und **dadurch gekennzeichnet, dass** das eine oder die mehreren Programme dazu ausgelegt sind, Folgendes durchzuführen:
Erhalten (210) und Anzeigen einer zweiten Tagliste von einem Server, wobei die zweite Tagliste sowohl gemäß einer ersten Tagliste als auch einer auf dem Server (700) gespeicherten empfohlenen Tagliste erzeugt wird, die zweite Tagliste ein oder mehrere Tags in der ersten Tagliste und ein oder mehrere Tags in der auf dem Server (700) gespeicherten empfohlenen Tagliste umfasst, die erste Tagliste gemäß Tags erzeugt wird, die einem Inhalt entsprechen, der von einem Benutzer in einer Zielzeitperiode durchsucht wird, und die erste Tagliste ein oder mehrere Tags umfasst, die auf dem Server (700) gespeicherte empfohlene Tagliste ein oder mehrere Tags umfasst und jedes Tag eine Inhaltskategorie repräsentiert;
Empfangen (220) einer Auswahl von Tags eines Benutzers in der zweiten Tagliste und Zurückgeben eines Auswahlergebnisses an den Server und Anzeigen, dass der Server auf Basis des Auswahlergebnisses eine neue empfohlene Tagliste erzeugen soll; wobei die neue empfohlene Tagliste auf dem Server (700) gespeichert wird und die zuvor auf dem Server (700) gespeicherte empfohlene Tagliste ersetzt; und
Empfangen (230) eines Inhalts, der vom Server gemäß der neuen Empfehlungstagliste empfohlen wird.

14. Computerlesbares Speichermedium (800), auf dem Programmcodes (810) gespeichert sind, **dadurch gekennzeichnet, dass** die Programmcodes (810) von einem Prozessor aufgerufen werden, um das Verfahren nach einem der Ansprüche 1-11 auszuführen.

## Revendications

1. Procédé de recommandation de contenu mis en œuvre par un serveur (700), **caractérisé en ce qu'**il comprend :
l'obtention (S110) d'une première liste de balises, dans lequel la première liste de balises est générée par le serveur (700) en fonction de balises correspondant au contenu parcouru par un utilisateur au cours d'une période de temps cible ; et la première liste de balises comprend une ou plusieurs balises, et chaque balise représente une catégorie de contenu ;
l'obtention (S120) d'une seconde liste de balises, dans lequel la seconde liste de balises est générée par le serveur (700) en fonction de la première liste de balises et d'une liste de balises recommandées stockée sur le serveur (700) ; dans lequel la liste de balises recommandées stockée sur le serveur (700) comprend une ou plusieurs balises, chaque balise représentant une catégorie de contenu, et la seconde liste de balises comprend une ou plusieurs balises de la première liste de balises et une ou plusieurs balises de la liste de balises recommandées stockée sur le serveur (700) ;
l'obtention (S130) de balises sélectionnées par l'utilisateur par l'intermédiaire d'un terminal mobile à partir de la seconde liste de balises, et la génération d'une nouvelle liste de balises recommandées sur la base des balises sélectionnées par l'utilisateur ;
dans lequel la nouvelle liste de balises recommandées est stockée sur le serveur (700) et remplace la liste de balises recommandées précédemment stockée sur le serveur (700) ; et
la poussée (S140) du contenu correspondant aux balises de la nouvelle liste de balises recommandées vers un terminal mobile.

2. Procédé selon la revendication 1, dans lequel l'obtention (S110) d'une première liste de balises comprend :
l'obtention des balises correspondant au contenu parcouru par l'utilisateur au cours de la période de temps cible ;
la sélection de balises ayant des temps de parcours supérieurs à des temps cibles parmi des balises obtenues, et la génération de la première liste de balises.

3. Procédé selon la revendication 1, dans lequel l'obtention (S110) d'une première liste de balises comprend :
l'obtention des balises correspondant au contenu parcouru par l'utilisateur au cours de la période de temps cible ;
la sélection du nombre cible de balises parmi les balises obtenues en fonction de temps de parcours, du plus élevé au plus faible, et la génération de la première liste de balises.

4. Procédé selon l'une quelconque des revendications 1 à 3, dans lequel la période de temps cible est une période comprise entre l'instant où la liste de balises recommandées a été générée la dernière fois et l'instant actuel.

5. Procédé selon l'une quelconque des revendications 1 à 3, dans lequel la période de temps cible est une période de temps stockée à l'avance.

6. Procédé selon l'une quelconque des revendications 1 à 5, dans lequel, avant l'obtention (S120) d'une seconde liste de balises, le procédé comprend en outre :
le fait de déterminer si la ressemblance entre la première liste de balises et la liste de balises recommandées stockée est inférieure à une valeur de seuil prédéfinie ;
en cas de réponse positive, l'exécution d'opérations d'obtention de la seconde liste de balises.

7. Procédé selon l'une quelconque des revendications 1 à 6, dans lequel l'obtention (S120) d'une seconde liste de balises comprend :
le tri de balises de la première liste de balises et de balises de la liste de balises recommandées, de la plus haute à la plus basse, en fonction de temps de parcours de l'utilisateur, et la génération de la seconde liste de balises.

8. Procédé selon l'une quelconque des revendications 1 à 6, dans lequel l'obtention (S120) d'une seconde liste de balises comprend :
la combinaison de la première liste de balises et de la liste de balises recommandées respectivement sous la forme de deux sous-listes de balises et la génération de la seconde liste de balises.

9. Procédé selon l'une quelconque des revendications 1 à 8, dans lequel, avant l'obtention (S130) de balises sélectionnées par l'utilisateur à partir de la seconde liste de balises, le procédé comprend en outre :
la définition d'une balise dans la seconde liste de balises ayant des temps de parcours de l'utilisateur supérieurs à des temps spécifiés, en tant que balise sélectionnée.

10. Procédé selon l'une quelconque des revendications 1 à 9, dans lequel l'obtention (S130) de balises sélectionnés par l'utilisateur à partir de la seconde liste de balises, et la génération d'une nouvelle liste de balises recommandées comprennent :
l'envoi de la seconde liste de balises au terminal mobile et l'indication au terminal mobile de fournir des balises de la seconde liste de balises à l'utilisateur à des fins de sélection ;
la réception d'un résultat de sélection renvoyé par le terminal mobile en fonction de la sélection de l'utilisateur ;
la génération de la nouvelle liste de balises recommandées à partir de balises sélectionnés par l'utilisateur dans le résultat de sélection.

11. Procédé selon l'une quelconque des revendications 1 à 10, dans lequel la poussée (S140) vers un terminal mobile d'un contenu correspondant à des balises de la nouvelle liste de balises recommandées comprend :
la réception d'une demande de recommandation de contenu envoyée par le terminal mobile ;
la recherche d'un contenu correspondant à la nouvelle liste de balises recommandées ;
le renvoi du contenu recherché au terminal mobile.

12. Serveur (700), comprenant :
un ou plusieurs processeurs (710);
une mémoire (720) ; et
un ou plusieurs programmes, dans lequel le ou les programmes sont stockés dans la mémoire et configurés pour être exécutés par le ou les processeurs, et **caractérisé en ce que** le ou les programmes sont configurés pour mettre en œuvre le procédé selon l'une quelconque des revendications 1 à 11.

13. Terminal mobile, comprenant :
un ou plusieurs processeurs ;
une mémoire ; et
un ou plusieurs programmes, dans lequel le ou les programmes sont stockés dans la mémoire et configurés pour être exécutés par le ou les processeurs, et **caractérisés en ce que** le ou les programmes sont configurés pour effectuer :
l'obtention (210) et l'affichage d'une seconde liste de balises à partir d'un serveur, dans lequel la seconde liste de balises est générée en fonction d'une première liste de balises et d'une liste de balises recommandées stockée sur le serveur (700), la seconde liste de balises comprend une ou plusieurs balises de la première liste de balises et une ou plusieurs balises de la liste de balises recommandées stockée sur le serveur (700), la première liste de balises est générée en fonction de balises correspondant au contenu parcouru par un utilisateur au cours d'une période de temps cible, et la première liste de balises comprend une ou plusieurs balises, la liste de balises recommandées stockée sur le serveur (700) comprend une ou plusieurs balises et chaque balise représente une catégorie de contenu ;
la réception (220) de la sélection par l'utilisateur de balises de la seconde liste de balises et le renvoi d'un résultat de sélection au serveur et l'indication au serveur de générer une nouvelle liste de balises recommandées sur la base du résultat de la sélection ; dans lequel la nouvelle liste de balises recommandées est stockée sur le serveur (700) et remplace la liste de balises recommandées précédemment stockée sur le serveur (700) ; et
la réception (230) du contenu recommandé par le serveur en fonction de la nouvelle liste de balises de recommandation.

14. Support de stockage lisible par ordinateur (800), stockant des codes de programmes (810), **caractérisé en ce que** les codes de programmes (810) sont appelés par un processeur pour mettre en œuvre le procédé selon l'une quelconque des revendications 1-11.
